# EUROPEAN PATENT SPECIFICATION

(11) **EP 0 549 843 B1**
(45) Date of publication and mention of the grant of the patent: **25.09.1996**
(21) Application number: 92100026.1
(22) Date of filing: 02.01.1992
(51) Int. Cl.: G02B 6/44

(54) **Apparatus for manufacturing slot-spacer type optical cable**
Vorrichtung zur Herstellung optischer Kabel mit Führungsnuten
Appareil pour la fabrication des câbles optiques avec des rainures de guidage

(43) Date of publication of application: 07.07.1993
(73) Proprietor: YOSHIDA KOGYO KABUSHIKI KAISHA, Suginami-Ku, Tokyo (JP)
(72) Inventor: Yoshida, Katsutoshi, c/o Yoshida Kogyo K.K., Suginami-ku, Tokyo (JP); Itaya, Nobushige, c/o Yoshida Kogyo K.K., Suginami-ku, Tokyo (JP); Yamada, Yoshinori, c/o Yoshida Kogyo K.K., Kodaira-shi, Tokyo (JP); Enomoto, Masayoshi, c/o Yoshida Kogyo K.K., Kodaira-shi, Tokyo (JP)
(74) Representative: Behrens, Dieter, Dr.-Ing.

(56) References cited:
- EP-A- 0 020 189
- EP-A- 0 168 278
- EP-A- 0 316 798
- FR-A- 2 508 694
- GB-A- 2 121 209
- GB-A- 2 229 461

## Description

### BACKGROUND OF THE INVENTION

### Field of the Invention:

The present invention relates to an apparatus for manufacturing an optical cable having a core formed with longitudinal grooves for receiving optical fibre ribbons, or more specifically to an apparatus for manufacturing the above-mentioned type of optical cables that adopts the laying-in collection method in which a plurality of optical fibre ribbons or optical fiber units) are laid continuously in helical grooves of the core, according to the preambles of the claims.

### Description of the Prior Art:

As devices for manufacturing the above-mentioned type of optical cables, which collect optical fiber ribbons consisting of several optical fibers arranged in a vibbon form, or optical fiber units of bundled fibers forming circular cross section, by laying them in grooves formed in the outer surface of the core made of synthetic resin, we know the cage-rotation type which simply draws the core and lay in the optical fiber ribbons by rotating a cage which supports a pay-off device of ribbons arround the core, and the drawer-rotation type in which the core is drawn as it is rotated.

FR-A-25 08 694 discloses a rotated-cage type device, in which, when the pitch of a core varies due to a twist of a spacer, a sensor signal is transmitted to the motor to change the revolution rate thereof, which in turn changes the revolution rate of a disk and thereby an adjustment to align optical fibres drawn out from the bobbins of the disk and the grooves is effected. In this prior art, no idea to effect adjustment by moving the take-in device is disclosed.

GB-A-21 21 209 discloses a device using difference of phase between the cage and the rigid body which is minimized through revolution control. No technique to move the rigid body along the core-element is described.

EP-A-0 168 278 discloses compensating for a twist of the core detected from the pitch numbers per second of the slot of the core through control of the revolution rate of the optical fibre supplying devices. No part corresponding to a collecting die is shown in this prior art. Therefore, there is no provision to cope with a twist of the core by moving the collecting die.

EP-A 0 316 798 discloses an apparatus in which the spacer is taken up as it is rotated and groove detecting pins are held in the grooves and are used to detect twist of the spacer. This apparatus provides only a means to adjust the axial speed of the spacer to compensate a twist of the spacer. The lay plate which acts as a collecting die is not movable along the length of the spacer.

EP-A-0 020 189 only discloses controlling relative rotation between the head acting as a collecting die and a disk acting as supply cage. There is no provision to move the head along the length of the support.

GB-A-2 229 461 discloses a mechanism to guide optical fibre ribbons into the core grooves through cooperation of an upstream guide and a down stream guide. There is no collecting die movable along the length of the core.

The important technique with apparatuses for manufacturing optical cables having a core formed with longitudinal grooves for receiving optical fiber ribbons is the adjusting technique consisting of detecting twist in the core being paid-off, moving the collecting die corresponding to the detected twist, and further adjusting drawing speed of the drawing device. In the conventional apparatuses of either the cage-rotation type or the drawer-rotation type, there is a drawback that response to detected twist is not sufficiently accurate and quick due to a time lag between detection of twist in the core and adjustment.

### Brief Summary of the Invention:

An object of the invention as defined in the appendant claims is to provide an aparatus for manufacturing optical cables having a core formed with longitudinal grooves for receiving optical fiber ribbons that can lay optical fiber ribbons or optical fiber units accurately and smoothly in the grooves of the core. The term "optical fiber ribbon" in this description and in the claims is intended to comprise both optical fibers ribbons in ribbon form and optical fiber units of bendled fibers forming a circular cross-section. This invention also includes two types of embodiments: one is a drawer-rotation type, in which the core itself is paid off as it is rotated about its axis while optical fiber ribbons or optical fiber units do not rotate about said axis; the other is a cage-rotation type, in which the core stays unrotated while a cage that pays off optical fiber ribbons or optical fiber units rotate around the slotspacer. In either of the embodiments, the twist of the core is detected at the collecting die or the collecting die assembly that lays optical fiber ribbons or optical fiber units in the grooves, by a pin that engages with a groove and the collecting die or collecting die assembly is adjusted forward or backward corresponding to the twist angle in the running direction of the core. In the apparatuses for manufactruing optical cables according to the invention, the collecting die or the collecting die assembly is servo-controlled to return always to the original position in order that the collecting die or collecting die assembly be not biased to one direction in displacement for adjustment.

According to the invention, in which the change of groove pitch of the core is detected at the collecting die or the collecting die assembly and correcting measure to the change of pitch is taken by moving the light weighted collecting die or collecting die assembly, there is the effect that high quality optical cables of the above-mentioned type can be produced owing to accurate and quick response to the pitch change. Further. the apparatuses according to the invention have the advantage that taping after collection of optical fiber ribbons or optical fiber units by laying is carried out without slack in tape, resulting in a beautiful exterior appearance because the taping device is driven by a secondary driving shaft which varies its revolution rate corresponding to the pitch change.

### Brief Description of the Drawings

Fig. 1 is a simplified side elevational general view of the first embodiment of the invention;
Fig. 2 is a side elevational section that shows the collecting die part of the first embodiment;
Fig. 3 is a diagram of the servo control system that keeps the collecting die in a predetermined position;
Fig. 4 is detailed diagram for explaining the drive-driven relationship;
Fig. 5 is a diagonal view of the core;
Fig. 6 is a side elevational section illustrating the laying-in operation of optical fiber ribbons or optical fiber units in the slots;
Fig. 7 is a schematic side elevational general view of the second embodiment of the invention; and
Fig. 8 is a side elevational section showing the collecting die assembly of the second embodiment.

### Detailed Description of the Preferred Embodiments (Core and Optical Fiber Ribbons)

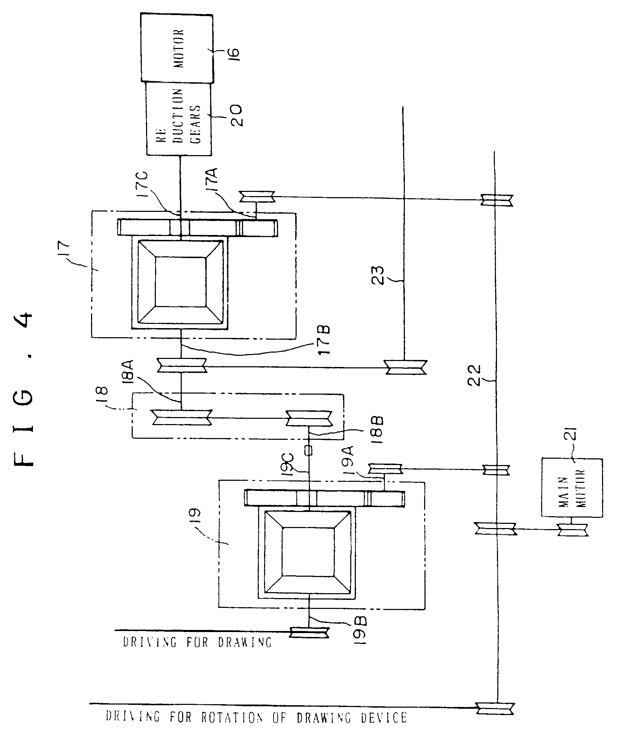

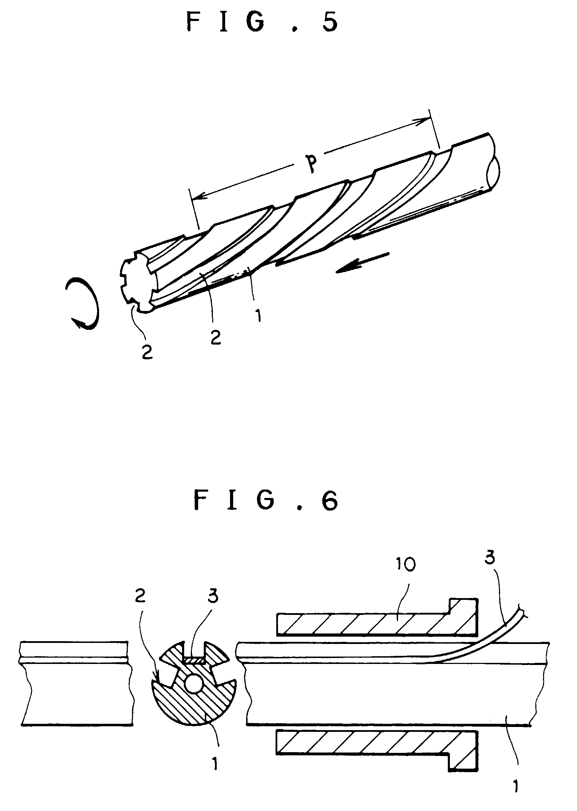

Referring to Fig. 5 and 6, the optical fiber ribbons 3 and the core 1 that are handled in this invention will be described. One optical fiber ribbon, that is, the optical fiber ribbon 3 consists of a plurality of optical fibers packed into a ribbon form. Usually, a plurality of them are laid one on the other in the grooves 2 of the core 1 of substantially circular section made of a synthetic resin. The core 1 is usually formed with a plurality of grooves 2, and the pitch. of the helix of the grooves varies from 100 mm to 1200 mm, but in most case it is within the range of 400 mm ∼ 700 mm. In the apparatuses according to the invention, as will be understood from the description heretofore, optical fiber units can be handled instead of optical fiber ribbons, but it shall be noted that, to avoid complexity, we write only "optical fiber ribbon" instead of optical fiber ribbon or optical fiber unit".

### (The First Embodiment, core-rotation Type)

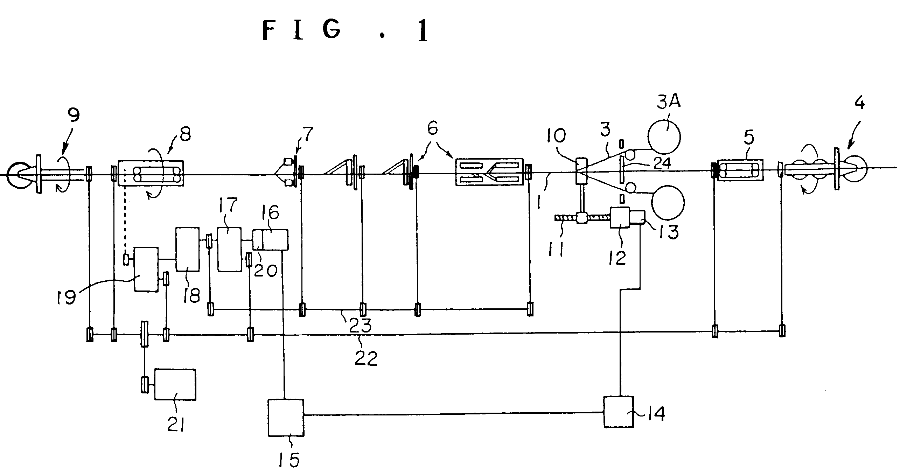

An embodiment of the invention will be described with reference to Fig. 1 through Fig. 3. This embodiment is an apparatus known as the core-rotation type, in which the core is drawn with a speed V while it rotates about its axis with revolution rate N.

As shown in Fig. 6, in order to lay optical fiber ribbons 3 in the grooves 2 of the core 1 in a smooth and continuous operation, it is necessary that, seen from the collecting die 10 (Fig. 1) which lays the ribbons 3 in the grooves 2, each of the grooves 2 moves as a straight line, that is, the ratio of the drawing speed V and the revolution rate N of the core 1 must be kept equal to the pitch p of the grooves on the core 1 : V/N = p.

In reality, however, the groove pitch fluctuates incessantly due to distorsion brought about in the ribbons as they are paid of from the pay-off bobbin 3A and to processing errors in the grooves 2 themselves. In this invention, this change of the groove pitch is detected at once at the collecting die, and the collecting die is moved in an immediate response to compensate the change, while, at the same time the collecting die is servo-controlled to return to the original position.

### (Used Core and Setting of the Fundamental Pitch)

Referring to Fig. 1, the flow of the core 1 and the ribbons 3 will be described. The core 1 is paid off from the core pay-off device 4 on the right end of Fig. 1, passes through the central hole of the distributor plate 24 as it receives braking force at the caterpillar type braking device 5 to get tension, is loaded with a plurality of optical fiber ribbons paid off from the ribbon pay-off bobbin 3A at the collecting die 10, and via the taping devices 6 (in Fig. 1 are shown three of them: one tangential type and two central types) and the coarse winder 7, is drawn by the caterpillar type drawing device 8 and is finally taken up by the take-up device 9.

As described above, since the apparatus is of the type which draws the core while it is rotated, all of the core pay-off device 4, the braking device 5, the drawing device 8, and the take-up device 9 work as they rotate with the same revolution in the direction opposite to the helix of the grooves 2. Of course the taping device 6 and the coarse winder 7 are also driven for rotation.

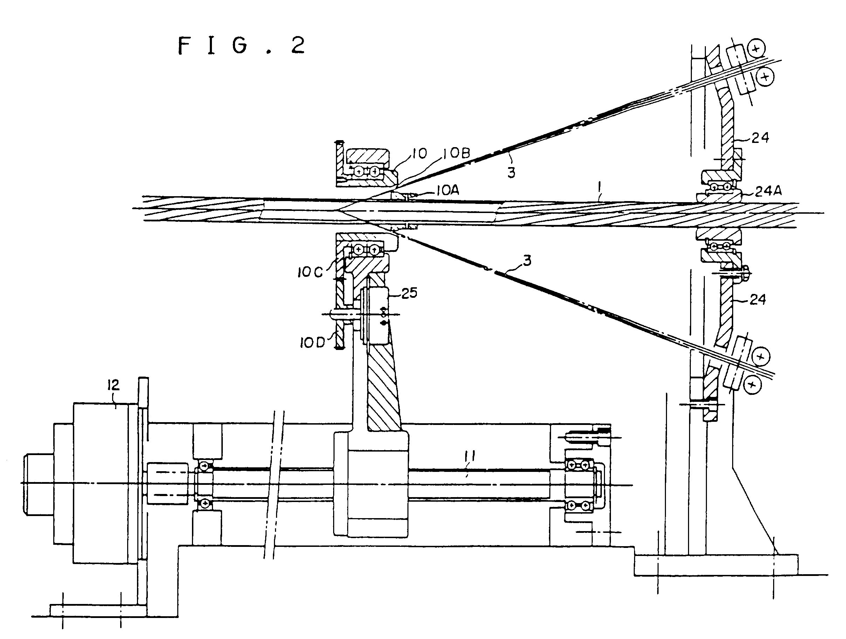

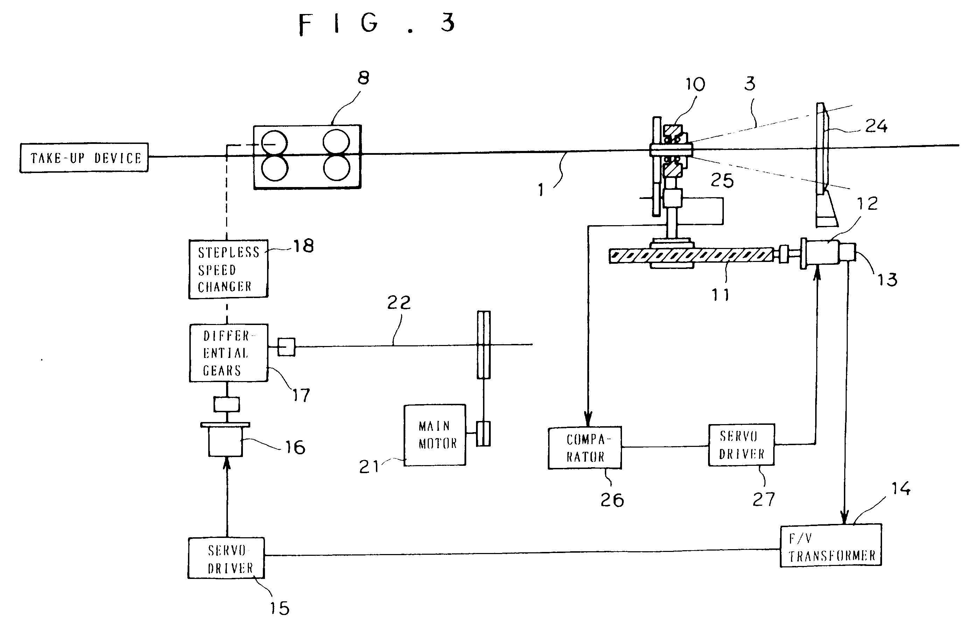

As shown in detail in Fig. 4, the revolution rate N of the core is determined by the revolution of the primary driving shaft 22 driven for rotation by the main motor 21. On the other hand, the drawing speed V is determined by the revolution of the sprocket of the caterpillar of the drawing device 8. This revolution is given by the output shaft of the first differential gear 19 which is adjusted by the stepless speed changer 18 (adjusted manually or by a pilot motor). The reason for this makeup is that the invention aims at universal machines that can correspond to various groove pitches of the core. The apparatuses of the invention are thus preferably designed so as to give, with zero adjustment of the stepless speed changer, a drawing speed V for revolution N that corresponds to a pitch in the intermediate range 400 mm ∼ 500 mm.

### (Detection of Twist of Core)

Next, referring mainly to Fig. 2, the detector of change of pitch in the core 1, which is characteristic of the invention, will be described. The collecting die 10 is an almost circular hollow cylinder, supported rotatably on the base through a suitable bearing, and has the guide holes 10B of the same number with the grooves spaced equiangularly. Through the hollow portion of the collecing die runs the core 1 and in the inner wall of the hollow portion are attached one or two pins 10A protruding inwardly for engagement with the grooves of the core 1.

On the collecting die 10 is fixed coaxially a gear 10C, and another gear 10D that engages with said gear 10C is provided to drive for rotation the input shaft of a rotation angle detector 25 such as a potentiometer.

The whole body of the collecting die 10 is attached to a sliding body having a female screw that engages with a precision feed screw 11 such as a ball screw which is driven by the servo motor 12.

The distributor plate 24 is fixed to the base and at the center thereof is provided rotatably a core guide 24A. Through the central hole of the core guide 24A runs the core 1 sliding.

As the core 1 goes forward, the grooves 2 being engaged with the pin(s) 10A, for every advance by one pitch of the core 1, the collecting die 10 makes precisely one revolution. Actually in the apparatus according to the invention, the core 1 is drawn in such a manner as to maintain the relationship: V/N = p; therefore the collecting die 10 stays still without rotation and, in this process, the collecting die 10 goes on laying the optical fibre ribbons 3 in the grooves 2 of the core 1. If a twist comes up on the core 1, however, the pitch of the grooves 2 is disturbed and the deviation is detected by the rotation angle detector 25.

### (Adjustment of the Collecting die)

Let the core 1 that advances to the left in fig. 5 have a twist in the counterclockwise direction seen from the right end of the figure, then the collecting die 10 does not make one whole revolution (360 degrees) but rotates by (360 - δ) degrees for the advancement of the core 1 by one precise pitch. In this case, what is needed is to delay the laying operation of the optical fibre ribbons according to the lag in the rotation of the grooves 2 by shifting the collecting die 10 toward upstream or to the right in Fig. 2 by a small quantity corresponding to δ. If the twist of the core 1 is in the reverse direction to the above case, the collecting die 10 should be, of course, shifted to the left in Fig. 2, that is, toward downstream. In this manner, by moving forward or backward the collecting die 10, the twist of the core 1 is immediately compensated to place the optical fibre ribbons 3 in the grooves 2 fittingly.

The device that moves the collecting die 10 in reality is, as shown distinctly in fig. 2 and 3, the feed screw 11 which is driven by the servo motor 12. the rotation angle of the collecting die 10 which is rotated by the core 1 with a twist is compared with the normal value by the comparator 26, and the difference of angle is transmitted to the servo motor via the servo driver 27.

### (Adjustment of Drawing Speed)

Now remains the following problem: if the twist of the core 1 is biased to one direction the collecing die 10 will move more in the direction along the feed screw axis 11.

Since it is practically impossible to prepare an infinitely long feed screw 11, this is a problem to be solved.

As described above, it is possible to compensate the change of pitch of the grooves 2 due to a twist on the core 1 by movement of the collecting die 10. However, it is a local and temporary measure; it is intolerable that such a state lasts long, and a feed screw of finite length cannot cope with the twist biased to one direction.

This problem is solved in the invention as follows: if the twist of the core 1 is biased to one direction, for example, to the side to decrease the pitch of the grooves 2, then, the machine recognizes the shorter pitch as if it were the original pitch and lowers the drawing speed V of the core 1, which permits the collecting die 10 to return to the original position.

This adjustment is effected in the following manner: As shown in Fig. 1 and 4, the displacement of the collecting die 10 is detected by a rotary encoder 13 provided at the end of the feed screw 11, then transformed into voltage by an F/V transducer 14, and then input to the servo driver 15, which rotates the motor 16 at the speed proportional to the input value, which in turn rotates the input shaft 17C of the second differential gear 17 via reduction gears 20 to quickly accelerate or decelerate the drawing device 8 and thereby to return the collecting die 10 to the original position. It is a well-known technique that differential gears can be used effectively to change the driving speed of the primary driving shaft 22 of the main driving line through a break-in from a subsidiary line.

In summary, the control system of the invention is a feedback control system or a servo control system that moves immediately the collecting die 10 when a twist is detected in the core 1, and at the same time increases or decreases the drawing speed to return the collecting die 10 to the original position.

### (Driving Gears)

If the drawing speed of the core 1 is changed as described above, the revolution rates of the taping device 6 and the coarse winder 7 must be also changed correspondingly. It is characteristic of the invention, that this very adjustment is effected by driving said taping device 6 and coarse winder 7 through the secondary driving shaft 23 which changes revolution corresponding to the change in the drawing speed, giving a beautiful external appearance of taping without slack.

Referring to Fig. 1 and 4, the driving gears and especially adjustment thereof according to the invention will be described in more detail.

What is to be adjusted is the drawing speed V of the drawing device 8. The drawing device 8 is driven by the primary driving shaft 22 at a speed predetermined in the design stage of the apparatus that remains constant throughout the operation. First, at the start-up of the operation, the pitch setting is done according to the pitch p of the grooves 2 of the core 1, that is, the drawing speed V is set in such a manner that the ratio of V and the revolution rate N is equal to said pitch: V/N = p. For this purpose, the first differential gears 19 and the stepless speed changer 18 are used. Owing to the well-known action of differential gears, the output shaft 19B gets the revolution rate that is the composition of the revolution rates of the input shaft 19A and the other input shaft 19C. The desired revolution rate of the input shaft 19C is given from the second differential gears described later through the stepless speed changer 18 and the output shaft thereof. Thus, it is seen that the first differential gears are provided for setting the drawing speed V at the start of the operation. In the above, it is mentioned that adjustment of the drawing speed is effected through change of the revolution rate of one of the input shafts 19C of the first differential gears 19. It is also possible to effect this simply by adjusting the stepless speed changer 18 and thereby changing the revolution rate of the output shaft 18B thereof. This method, however, cannot be expected to provide precise adjustment, hence the invention introduces the above-described method that adjusts the speed through change of the revolution rate of the output shaft 17B of the second differential gears 17.

The action of the second differential gears 17 is, as described briefly above, such that a shift of position of the collecting die 10 is transmitted as a signal to rotate the motor 16, the speed of the spindle of the motor 16 is reduced (hence the torque is increased) through the reduction gears 20, and revolution of the corresponding rate is given to the input shaft 17C, which gives the desired composite revolution rate to the output shaft 17B to change the drawing speed of the core 1 and thereby to return the displaced collecting die 10 to the original position. Hence, it is seen that the second differential gears 17 serve the purpose of adjusting the pitch during the operation. The secondary driving shaft 23 is, as clearly seen from Fig. 4, driven by the output shaft 17B of the second differential gears 17, which means that the shaft 17 has the revolution rate corresponding to the drawing speed changed according to the variation in pitch of the core 1, and that a taping of beautiful appearance without slack is given by the taping device driven by the secondary driving shaft 23.

Thus, the embodiment according to the invention has the effect that a relatively high-speed operation possible because the core is drawn as it is rotated instead of the pay-off cage of the optical fibre ribbons, and that a precise setting of pitch at the start of operation, and also a precise adjustment of the drawing speed corresponding to the pitch change during the operation are possible due to use of two differential gear devices.

### (The Second Embodiment: Cage-Rotation Type)

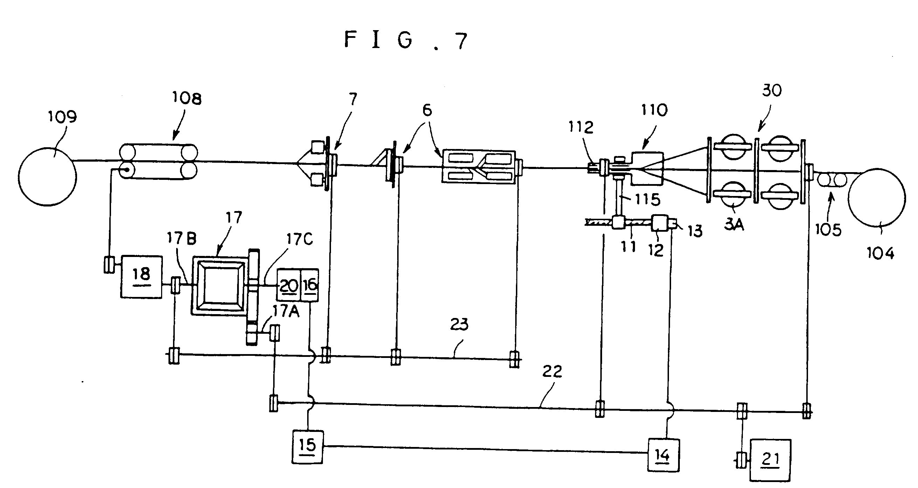

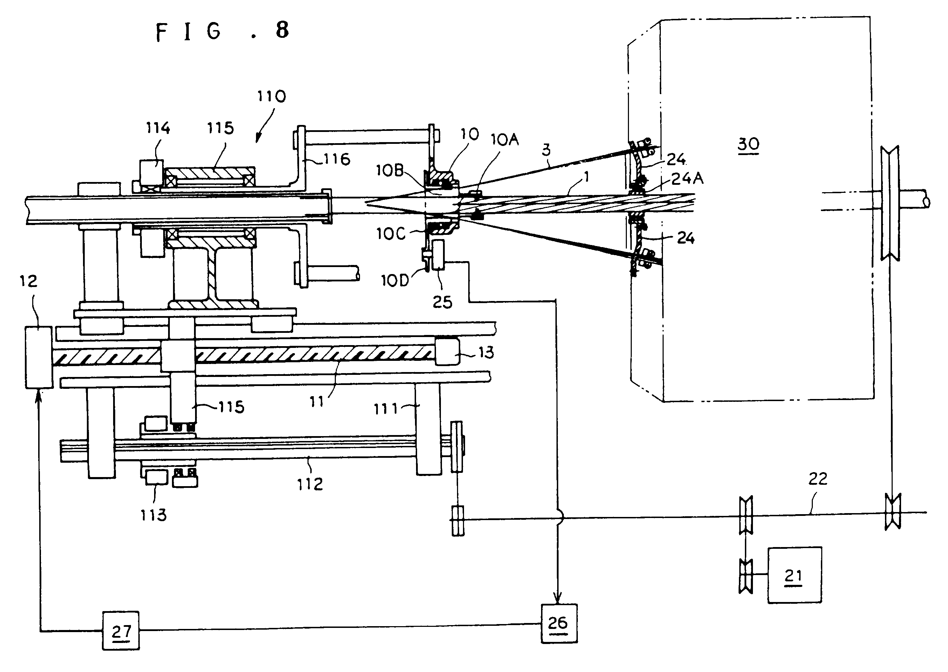

Referring to Fig. 7 and 8, the cage-rotation type apparatus for manufacturing optical cable having a core formed with longitudinal grooves for receiving optical fibre ribbons, the second embodiment of the invention, will be described. Fig. 7 corresponds to Fig. 3 and 4, and Fig. 8 to Fig. 2 of the first embodiment. Throughout both embodiments, the same reference numbers are used for the same elements, and for the second embodiment, the elements that are similar to the corresponding ones of the first embodiments but with slight difference in action are referred to with numbers made by adding 100 to the corresponding ones of the first embodiment (except reference numbers 111 ∼ 116 used in the collecting die assembly 100). Since it is believed that descriptions of the individual elements are complete with those for the first embodiment, hereinafter, mainly the differences with the first embodiment will be described.

In the second embodiment, the core 1 is paid off without rotation. The pay-off device 104 may be merely a bobbin on which is wound the core 1 and which can rotate about the axis thereof for paying off the core 1. The braking device 105 may be also the same with the braking device 5 for the first embodiment but without the means for rotating itself about the axis of the core 1.

In the second embodiment, the core 1 runs with a drawing speed V without rotation; therefore, the optical fibre ribbons 3 must make a full turn around the core 1 in order to be laid in the grooves 2 of the core 1 in the same direction with the helix lines of the grooves 2 while the core 1 advances the distance of one pitch p. Hence the pay-off cage 30 that pays off the optical fibre ribbons 3 must be driven to rotate at the revolution rate N = V/p. In practice, for a selected core 1, the drawing speed V and the revolution rate N are suitably set beforehand to be within the rated capacity of the apparatus.

The pay-off cage 30 is, as shown in Fig. 7, a rotatable frame that supports the bobbin 3A of the optical fibre ribbons, and the optical fibre ribbons that are the same in number with the grooves 2 of the core 1 are, as shown in Fig. 8, paid out downstream through the holes of the distributor plate 24.

The collecting die assembly 110 is provided downstream the pay-off cage 30. Different from the collecting die 10 of the first embodiment, this collecting die assembly 110 must not only be adjustable in the direction of the axis of the core 1, but also be rotatable in perfect synchronous motion with the pay-off cage 30. For this purpose, as shown in Fig. 8, the rotatable frame 116 that serves to support the collecting die 10 in the first embodiment is supported rotatably by the slidable frame 115 that can be slided along the axis of the core 1. In Fig. 8, numeral 112 designates the spline shaft provided to be rotatable and parallel to the feed screw 11 on the fixed main frame 111. The pully 113. sliding on the spline shaft 112, belt-drives the rotatable frame 116 through the pully 114. At the end of the feed screw 11 are provided, as in the first embodiment, a servo motor 12 and a rotary encoder 13. In the second embodiment, it is not necessary to rotate also the drawing device 108 and the take-up device about the running direction of the core 1. Here, let it be noted that the collecting die assembly 110 in Fig. 7 is shown only schematically and the detail thereof should be seen in Fig. 8.

## Claims

1. An apparatus for manufacturing an optical cable having a core formed with longitudinal grooves for receiving optical fibre ribbons said apparatus comprising:
a core pay-off device (4) which is driven to rotate at a predetermined rate of revolution, thereby paying off a core (1) having a plurality of helical grooves (2) formed in the outer surface thereof;
a drawing device (8) which is driven to rotate at the same rate of revolution and in the same direction as said core pay-off device (4), thereby drawing said core (1) at a speed (V) determined by the pitch (p) of said helical grooves and the rate (N) of revolution of said core pay-off device;
an optical fibre ribbon pay-off device which, is provided between said core pay-off device (4) and said drawing device (8), and which pays off optical fibre ribbons (3) of the same number as said grooves (2);
a collecting die (10) which is supported to be rotatable about the path of said core (1), said die guiding said ribbons (3) in to said grooves (2) of the core (1) and laying said ribbons (3) therein, and having at least one pin (10A) which protrudes inwardly from the inner wall of an apertured portion of said collecting die (10) through which said core (1) travels, each pin engaging with a respective groove (2) of said core (1);
characterized by a feed screw (11) which is arranged to be rotated by a servo motor (12) so as to engage and translate a sliding body which supports said collecting die (10);
a rotation angle detector (25) which, is arranged to be integral with said collecting die (10), and to detect any twisting of said core and to directly compensate for the twisting by activating said servo motor (12) to translate the sliding body in dependence upon the magnitude and direction of the twisting, and
a rotary encoder (13) which, is arranged to detect the magnitude and direction of any rotation of said feed screw (11), to correspondingly adjust the drawing speed of said drawing device (8), thereby causing the collecting die to return to its orginal position after a twist has been detected.

2. Apparatus for manufacturing an optical cable having a core formed with longitudinal grooves for receiving optical fibre ribbons said apparatus comprising:
a core pay-off device (104) which pays off a core (1) having a plurality of helical grooves (2) formed in the outer surface thereof;
a pay-off cage (30) which is disposed downstream of said core pay-off device (104), which supports optical fibre ribbon pay-off bobbins (3A) of the same number as said grooves (2), and which is arranged to rotate at a rate of revolution determined by the paying-off speed of said core (1) and the pitch (p) of said helical grooves;
a collecting die assembly (110) which guides said ribbons (3) to said grooves (2) of the core (1) and lays said ribbons (3) therein, and which is arranged to rotate around the path of said core (1) at the same rate of revolution and in the same direction as said pay-off cage (30);
a drawing device (108) which, is disposed downstream of said collecting die assembly (110), and is arranged to draw said core (1) at the same speed as the pay-off speed and
at least one engage pin (10A) which protrudes inwardly from the inner wall of an apertured portion of said collecting die assembly (110) through which said core (1) travels, each pin being arranged to engage a groove (2) in said core (1),
characterized by a feed screw (11) which is arranged to be rotated by a servo motor (12) so as to engage and translate a sliding frame (115) to which said collecting die assembly (110) is rotatably attached;
a rotation angle detector (25) which, is integral with said collecting die assembly (110) and is arranged to detects any twisting of said core (1) and to compensate for the twisting by activating said servo motor (12) to translate the sliding body independence upon the magnitude and direction of the twisting,
and a rotary encoder (13) which, is arranged to detect to the magnitude and direction of any rotation of said feed screw (11), to adjust the drawing speed of said drawing device (118) correspondingly and thereby causing the collecting die to return to its original position after a twist has been detected.

## Patentansprüche

1. Vorrichtung zum Herstellen eines optischen Kabels mit einem Kern, in dem Längsnuten zur Aufnahme von Bändern aus optischen Fasern ausgebildet sind, wobei die Vorrichtung aufweist:
eine Kernablaufvorrichtung (4), die mit einer vorbestimmten Drehzahl drehangetrieben wird, dadurch einen Kern (1) ablaufen läßt, in dessen Außenfläche eine Vielzahl wendelförmiger Nuten (2) eingearbeitet sind,
eine Ziehvorrichtung (8), die mit derselben Drehzahl und in derselben Richtung wie die Kernablaufvorrichtung (4) drehangetrieben wird, dadurch den Kern (1) mit einer Geschwindigkeit (V) zieht, die durch die Ganghöhe (p) der wendelförmigen Nuten und die Drehzahl (N) der Kernablaufvorrichtung bestimmt ist,
eine Abwickelvorrichtung für ein Band aus optischen Fasern, die zwischen der Kernablaufvorrichtung (4) und der Ziehvorrichtung (8) angeordnet ist und Bänder (3) aus optischen Fasern in gleicher Anzahl wie die Nuten (2) abwickelt,
einen Zusammenführungsnippel (10), der um die Bewegungsbahn des Kerns (1) drehbar gelagert ist, die Bänder (3) in die Nuten (2) des Kerns (1) führt und sie in diese hineinlegt und wenigstens einen Stift (10A) aufweist, der von der Innenwand eines mit einer Öffnung versehenen, vom Kern (1) durchlaufenen Abschnitts des Zusammenführungsnippels (10) nach innen herausragt, wobei jeder Stift in eine zugehörige Nut (2) des Kerns (1) eingreift,
gekennzeichnet durch
eine Vorschubgewindespindel (11), die durch einen Servomotor (12) so drehantreibbar ist, daß sie in einen den Zusammenführungsnippel (10) tragenden Schlitten eingreift und ihn translatorisch verstellt,
einen Drehwinkeldetektor (25), der mit dem Zusammenführungsnippel (10) fest verbunden ist und jede Verdrehung des Kerns (1) festzustellen und die Verdrehung durch Aktivieren des Servomotors (12) auszugleichen vermag, derart, daß der Schlitten in Abhängigkeit von der Größe und der Richtung der Verdrehung translatorisch verstellbar ist, und
einen Drehgeber (13), der die Größe und die Richtung jeder Drehung der Vorschubgewindespindel (11) festzustellen vermag, derart, daß er die Ziehgeschwindigkeit der Ziehvorrichtung (8) entsprechend einstellen kann und dadurch verursacht, daß der Zusammenführungsnippel in seine Ausgangsstellung zurückgeht, nachdem eine Verdrehung festgestellt worden ist.

2. Vorrichtung zum Herstellen eines optischen Kabels mit einem Kern, in dem Längsnuten zur Aufnahme von Bändern aus optischen Fasern ausgebildet sind, wobei die Vorrichtung aufweist:
eine Kernablaufvorrichtung (104), die einen Kern (1) ablaufen läßt, in dessen Außenfläche eine Vielzahl wendelförmiger Nuten (2) eingearbeitet sind,
einen Abwickelkorb (30), der in Arbeitsrichtung nach der Kernablaufvorrichtung (104) angeordnet ist, Abwickelspulen (3A) für Bänder aus optischen Fasern in derselben Anzahl wie die Nuten (2) trägt und der mit einer Drehzahl drehbar ist, die durch die Ablaufgeschwindigkeit des Kerns (1) und die Ganghöhe (p) der wendelförmigen Nuten bestimmt ist,
eine Zusammenführungsnippel-Anordnung (110), welche die Bänder (3) zu den Nuten (2) des Kerns (1) führt und sie in diese hineinlegt und um die Bewegungsbahn des Kerns (1) mit derselben Drehzahl und in derselben Richtung wie der Abwikkelkorb (30) drehbar ist,
eine Ziehvorrichtung (108), die in Arbeitsrichtung hinter der Zusammenführungsnippel-Anordnung (110) angeordnet ist und den Kern (1) mit derselben Geschwindigkeit wie die Ablaufgeschwindigkeit zu ziehen vermag, und
wenigstens einen Kupplungsstift (10A), der von der Innenwand eines mit einer Öffnung versehenen, vom Kern (1) durchlaufenen Abschnitts der Zusammenführungsnippel-Anordnung (110) nach innen herausragt, wobei jeder Stift in eine Nut (2) im Kern (1) einzugreifen vermag,
gekennzeichnet durch
eine Vorschubgewindespindel (11), die durch einen Servomotor (12) so drehantreibbar ist, daß sie in einen den Zusammenführungsnippel (10) tragenden verschiebbaren Rahmen (115), in dem die Zusammenführungsnippel-Anordnung (110) drehbar angeordnet ist, eingreift und ihn translatorisch verstellt,
einen Drehwinkeldetektor (25), der mit der Zusammenführungsnippel-Anordnung (110) fest verbunden ist und jede Verdrehung des Kerns (1) festzustellen und die Verdrehung durch Aktivieren des Servomotors (12) auszugleichen vermag, derart, daß der Schlitten in Abhängigkeit von der Größe und der Richtung der Verdrehung translatorisch verstellbar ist,
und einen Drehgeber (13), der die Größe und Richtung jeder Drehung der Vorschubgewindespindel (11) festzustellen vermag, derart, daß er die Ziehgeschwindigkeit der Ziehvorrichtung (118) entsprechend einstellen kann und dadurch verursacht, daß der Zusammenführungsnippel in seine Ausgangsstellung zurückgeht, nachdem eine Verdrehung festgestellt worden ist.

## Revendications

1. Appareil pour la fabrication d'un câble optique comprenant une âme munie de rainures longitudinales destinées à recevoir des rubans en fibres optiques, ledit appareil comprenant:
un dispositif dérouleur de l'âme (4) qui est commandé en rotation à une vitesse de rotation prédéterminée, moyen par lequel il déroule une âme (1) présentant un nombre de rainures hélicoïdales (2) pratiquées dans sa surface extérieure,
un dispositif de tirage (8) qui est commandé en rotation à la même vitesse de rotation et dans le même sens comme ledit dispositif dérouleur de l'âme (4), moyen par lequel il tire ladite âme (1) à une vitesse (V) déterminée par le pas (p) desdites rainures hélicoïdales et la vitesse de rotation (N) dudit dispositif dérouleur de l'âme,
un dispositif dérouleur de rubans en fibres optiques qui est prévu entre ledit dispositif dérouleur de l'âme (4) et ledit dispositif de tirage (8) et qui déroule des rubans en fibres optiques (3) dans le même nombre que lesdites rainures (2),
une filière de réunion (10), supportée de manière à pouvoir être tournée autour de la trajectoire de ladite âme (1), ladite filière menant lesdits rubans (3) dans lesdites rainures (2) de l'âme (1) et mettant en place lesdits rubans (3) dans ces dernières, et comprenant une broche (10A), au moins, qui fait saillie vers l'intérieur, par rapport à la paroi intérieure d'une partie de la filière de réunion (10), cette partie étant munie d'une ouverture et étant traversée par ladite âme (1), chaque broche étant en prise avec une rainure (2) respective de ladite âme (1),
caractérisé par
une vis d'avance (11) qui est apte à être tournée par un servomoteur (12), de manière à entrer en prise avec, et à déplacer en translation un chariot qui supporte ladite filière de réunion (10),
un détecteur d'angle de rotation (25) apte à être solidaire de ladite filière de réunion (10) et à détecter toute torsion de ladite âme et à compenser la torsion en activant ledit servomoteur (12), de manière qu'il déplace le chariot en translation en fonction du montant et du sens de la torsion, et
un capteur angulaire (13) capable de détecter le montant et le sens de toute rotation de ladite vis d'avance (11), de manière à régler en conséquence la vitesse de tirage dudit dispositif de tirage (8), moyen par lequel il provoque la filière de réunion à retourner à sa position initiale après qu'une torsion eut été détectée.

2. Appareil pour la fabrication d'un câble optique comprenant une âme munie de rainures longitudinales destinées à recevoir des rubans en fibres optiques, ledit appareil comprenant:
un dispositif dérouleur de l'âme (104) qui déroule une âme (1) dans la surface extérieure de laquelle un nombre de rainures hélicoïdales (2) sont pratiquées,
une cage débitrice (30) qui est disposée en aval dudit dispositif dérouleur de l'âme (104), qui supporte des dévidoirs de rubans en fibres optiques (3A) dans le même nombre que lesdites rainures (2), et qui est capable de tourner à une vitesse de rotation déterminée par la vitesse de déroulement de ladite âme (1) et du pas (p) desdites rainures hélicoïdales,
un ensemble de filière de réunion (110) qui mène lesdits rubans (3) vers lesdites rainures (2) de l'âme (1) et met en place lesdits rubans (3) dans ces dernières, et qui est capable de tourner autour de la trajectoire de ladite âme (1) à la même vitesse de rotation et dans le même sens que ladite cage débitrice (30),
un dispositif de tirage (108) qui est disposé en aval de l'ensemble de filière de réunion (110) et est capable de tirer ladite âme (1) à la même vitesse que la vitesse de déroulement, et
une broche d'entraînement (10A), au moins, qui fait saillie vers l'intérieur par rapport à la paroi intérieure d'une partie de l'ensemble de filière de réunion (110), cette partie étant munie d'une ouverture et étant traversée par l'âme (1), chaque broche étant capable d'entrer en prise avec une rainure (2) dans ladite âme (1),
caractérisé par
une vis d'avance (11) qui est apte à être tournée par un servomoteur (12), de manière à entrer en prise avec, et à déplacer en translation un cadre coulissant (115) dans lequel est monté en rotation ledit ensemble de filière de réunion (110),
un détecteur d'angle de rotation (25) qui est solidaire de l'ensemble de filière de réunion (110) et est capable de détecter toute torsion de ladite âme (1) et de compenser la torsion en activant ledit servomoteur (12), de manière à déplacer en translation le chariot en fonction du montant et du sens de la torsion,
et un capteur angulaire (13) qui est capable de détecter le montant et le sens de toute rotation de ladite vis d'avance (11), de manière à régler la vitesse de tirage du dispositif de tirage (118) en conséquence et, par ce moyen, de provoquer la filière de réunion à revenir à sa position initiale après qu'une torsion eut été détectée.
